(19) Europäisches Patentamt / European Patent Office / Office européen des brevets

(11) **EP 3 490 862 B1**

(12) **EUROPÄISCHE PATENTSCHRIFT**

(45) Veröffentlichungstag und Bekanntmachung des Hinweises auf die Patenterteilung:
**29.05.2024   Patentblatt 2024/22**

(21) Anmeldenummer: **17730091.0**

(22) Anmeldetag: **06.06.2017**

(51) Internationale Patentklassifikation (IPC):
**B60K 28/06** *(2006.01)*       **B60W 40/04** *(2006.01)*
**B60W 40/072** *(2012.01)*     **B60W 40/107** *(2012.01)*
**B60W 40/109** *(2012.01)*     **B60W 40/114** *(2012.01)*
**B60W 40/08** *(2012.01)*

(52) Gemeinsame Patentklassifikation (CPC):
**B60W 40/072; B60K 28/066; B60W 40/04;
B60W 40/107; B60W 40/109; B60W 40/114;
G01C 21/30; G06V 20/588;** B60W 2040/0827;
B60W 2040/0872; B60W 2050/0005;
B60W 2050/0006; B60W 2420/403;
B60W 2420/408; B60W 2420/54;          (Forts.)

(86) Internationale Anmeldenummer:
**PCT/EP2017/063653**

(87) Internationale Veröffentlichungsnummer:
**WO 2018/019454 (01.02.2018 Gazette 2018/05)**

(54) **VERFAHREN UND VORRICHTUNG ZUM ERMITTELN EINES FAHRBAHNMODELLS FÜR EIN FAHRZEUGUMFELD**

METHOD AND DEVICE FOR DETERMINING A ROADWAY MODEL FOR THE SURROUNDINGS OF A VEHICLE

PROCÉDÉ ET DISPOSITIF PERMETTANT DE DÉTERMINER UN MODÈLE DE CHAUSSÉE POUR UN ENVIRONNEMENT DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2016   DE 102016214045**

(43) Veröffentlichungstag der Anmeldung:
**05.06.2019   Patentblatt 2019/23**

(73) Patentinhaber: **Bayerische Motoren Werke Aktiengesellschaft
80809 München (DE)**

(72) Erfinder:
• **RAKOWSKI, Tim
85241 Hebertshausen (DE)**
• **RAUCH, Sebastian
85232 Guending (DE)**

(56) Entgegenhaltungen:
**EP-A2- 2 116 958          WO-A1-2004/031691
DE-A1-102005 038 314    US-A1- 2011 320 163
US-A1- 2014 067 187**

(52) Gemeinsame Patentklassifikation (CPC): (Forts.)
B60W 2520/105; B60W 2552/05; B60W 2556/45;
B60W 2556/50

(52) Gemeinsame Patentklassifikation (CPC): (Forts.)
B60W 2520/105; B60W 2552/05; B60W 2556/45;
B60W 2556/50

## Beschreibung

Die Erfindung betrifft ein Verfahren und eine Vorrichtung zum Ermitteln eines Fahrbahnmodells für das Umfeld eines Fahrzeugs mittels rekursiven Schätzens sowie ein Fahrzeug mit einer solchen Vorrichtung.

Moderne Fahrzeuge sind bereits heute mit Fahrerassistenzsystemen ausgestattet, welche bis zu einem gewissen Grad in das Fahrverhalten des Fahrzeugs eingreifen, d.h. Richtungsänderungen, Brems- und/oder Beschleunigungsvorgänge einleiten können. Dazu ist es unter anderem notwendig, den Fahrbahnverlauf mit den dem Fahrzeug zur Verfügung stehenden Ressourcen möglichst präzise vorhersagen zu können, um das Fahrverhalten des Fahrzeugs bzw. des Fahrerassistenzsystems darauf abzustimmen. Von besonderer Bedeutung ist die Vorhersage des Fahrbahnverlaufs dabei für Fahrzeuge, die zum hochautomatisierten Fahren ("HAF") oder gar autonomen Fahren eingerichtet sind, so dass sich das Fahrzeug dabei autonom oder weitgehend autonom fortbewegen kann. Beim hochautomatisierten Fahren erfolgt die Steuerung des Fahrzeugs überwiegend vollständig automatisiert, und der Fahrer muss nur in wenigen bestimmten Ausnahmesituationen, die das HAF-System zumindest nicht ausreichend sicher beherrscht, selbst eingreifen und die Steuerung des Fahrzeugs übernehmen. Beim autonomen Fahren erfolgt die Steuerung des Fahrzeugs dagegen grundsätzlich vollständig automatisiert und der Fahrer muss weder selbst eingreifen noch das automatisierte Fahren überwachen.

Üblicherweise werden zur Vorhersage des Fahrbahnverlaufs Sensordaten oder Kartendaten, aus denen das Umfeld des Fahrzeugs betreffende Information hervorgeht, verwendet, oder beide Arten von Daten sogar fusioniert. Dabei ist es eine besondere Herausforderung, aus der Vielzahl der möglichen Kombinationen von Sensordaten und/oder Kartendaten diejenige zu finden, welche den tatsächlich vorliegenden Fahrbahnverlauf am verlässlichsten wiedergibt.

Die Druckschrift DE 10 2005 038 314 A1 beschreibt ein Verfahren zum Schätzen des Verlaufs einer Fahrspur, wobei zur Schätzung des Spurverlaufs die Ausgangssignale mehrerer Sensoren ausgewertet werden, wobei die aus mehreren Sensoren ermittelten Merkmale einem gemeinsamen Kalman-Filter zugeführt werden, um daraus eine Hypothese für den Verlauf der Fahrspur zu generieren, wobei die Merkmale von Unterkombinationen der Sensoren einem Kalman-Filter zugeführt werden, um zu den einzelnen Unterkombinationen jeweils eine Hypothese für den Verlauf der Fahrspur zu generieren, wobei ein sich ergebender Verlauf der Fahrspur bestimmt wird, indem die einzelnen Hypothesen linear kombiniert werden.

Es ist eine Aufgabe der Erfindung, eine verbesserte Ermittlung des Fahrbahnverlaufs, insbesondere als Grundlage für eine automatisierte Steuerung eines Fahrzeugs, zu ermöglichen.

Diese Aufgabe wird gelöst durch ein Verfahren zum Ermitteln eines Fahrbahnmodells gemäß Anspruch 1, ein darauf beruhendes Verfahren gemäß Anspruch 10 zum Steuern eines Fahrzeugs, eine Vorrichtung gemäß Anspruch 11 zum Ermitteln eines Fahrbahnmodells sowie ein Fahrzeug gemäß Anspruch 13.

Ein erster Aspekt der Erfindung betrifft dementsprechend ein Verfahren zum Ermitteln eines Fahrbahnmodells für das Umfeld eines Fahrzeugs mittels rekursiven Schätzens, wobei jede Rekursion die folgenden Schritte aufweist: Sensorisches Erfassen von Beobachtungsdaten, die das Umfeld des Fahrzeugs oder dessen Bewegung kennzeichnen; Erfassen von Kartendaten, welche das Umfeld des Fahrzeugs kartographisch kennzeichnen; Generieren einer Mehrzahl verschiedener Hypothesen für das zu ermittelnde Fahrbahnmodell gemäß einer parametrisierten Zustandsfunktion, wobei jede der Hypothesen ein mögliches Fahrbahnmodell für den aktuellen Rekursionsschritt darstellt und durch eine mittels einer entsprechenden Parametrierung erzeugten unterschiedliche Assoziation der jeweils als Eingangsgrößen der Zustandsfunktion dienenden Beobachtungsdaten und Kartendaten gekennzeichnet ist; Schätzen eines Konfidenzwerts bezüglich eines vorbestimmten Konfidenzmaßes für jede der Hypothesen des aktuellen Rekursionsschritts mittels eines rekursiven Schätzverfahrens unter Einbeziehung wenigstens einer Hypothese aus dem vorausgegangenen Rekursionsschritt als eine Eingangsgröße; Auswählen, auf Basis der geschätzten Konfidenzwerte, einer der Hypothesen als Fahrbahnmodell für das Umfeld eines Fahrzeugs zum aktuellen Rekursionsschritt. Auf Basis der Konfidenzwerteverteilung wird festgestellt, ob für mehrere aufeinanderfolgende Rekursionsschritte die Hypothesen mit den besten Konfidenzwerten regelmäßig signifikant von den Kartendaten abweichen. Falls dies der Fall ist, werden die Kartendaten auf Basis des bzw. der ausgewählten Fahrbahnmodelle für diesen bzw. diese Rekursionsschritte korrigiert und/oder die Nichtaktualität der Kartendaten an eine zentrale Infrastruktur zur Bereitstellung der Kartendaten, etwa einen zentralen Kartendatenserver, gemeldet.

Unter einem "Fahrbahnmodell" im Sinne der Erfindung ist eine modellhafte Beschreibung von Eigenschaften eines Fahrbahnverlaufs im Umfeld, insbesondere im Vorfeld eines Fahrzeugs, zu verstehen, die insbesondere auch die Position und/oder Orientierung des Fahrzeugs relativ zu dem Fahrbahnverlauf angeben kann. Diese Eigenschaften des Fahrbahnverlaufs können insbesondere eine Richtung, Breite oder Krümmung der Fahrbahn, eine Anzahl von deren nebeneinanderliegenden Fahrspuren, die Position des Fahrzeugs bezüglich der Fahrspuren (zum Beispiel Fahrzeug befindet sich auf der linken, der mittleren oder der rechten von drei Fahrspuren), und/oder eine Ausrichtung des Fahrzeugs auf den Fahrspuren (zum Beispiel mit unterschiedlichen Gierwinkeln) angeben.

Oft liefern die für ein Fahrzeugumfeld sensorisch erfassten Beobachtungsdaten und die dazu erfassten Kartendaten keine vollständig übereinstimmende Beschreibung des Fahrzeugumfelds, so dass im Rahmen einer Fusion dieser Daten ein mit möglichst hoher Wahrscheinlichkeit die Wirklichkeit zumindest in guter Näherung beschreibendes Fahrbahnmodell ermittelt werden muss. Im Rahmen des Verfahrens können daher unterschiedliche Assoziationen der als Eingangsgrößen der Zustandsfunktion dienenden Beobachtungsdaten und Kartendaten gebildet werden, die zu unterschiedlichen Interpretation des Umfelds des Fahrzeugs führen können, insbesondere zu unterschiedlichen Fahrbahnverläufen und/oder unterschiedlichen Positionen bzw. Ausrichtungen des Fahrzeugs bezüglich der Fahrbahnverläufe. Diese verschiedenen Interpretationen des Umfelds des Fahrzeugs resultieren in verschiedenen Hypothesen des Fahrbahnverlaufs. Die verschiedenen Hypothesen können dabei aus einem Ausgangssatz von vorgegebenen Hypothesen ausgewählt werden und entsprechen verschiedenen Fahrbahnmodellen.

Mit Hilfe des Verfahrens können anders als bei herkömmlichen Schätzverfahren zu jedem Rekursionsschritt mehrere alternative Hypothesen aufgestellt, bewertet und ggf. zum nächsten Rekursionsschritt hin weiterentwickelt werden, so dass die Effektivität, insbesondere die Zuverlässigkeit der Schätzung, bei der Bestimmung des Fahrbahnmodells erhöht wird. An der zentralen Infrastruktur, etwa durch einen Kartendienstleister, kann eine Aktualisierung der Karte durchgeführt und die aktualisierten Kartendaten auch anderen Verkehrsteilnehmern zur Verfügung gestellt werden. Dies ist besonders vorteilhaft bei kurzfristigen Änderungen von Fahrbahnverläufen, insbesondere durch Baustellen und/oder Sperrungen von Fahrspuren, die in einer Karte, insbesondere selbst in hoch-genauen, üblicherweise nicht verzeichnet sind, da hierdurch die Konfidenzwerte von Hypothesen bei wiederholtem Abfahren der geänderten Fahrbahnverläufe durch Übereinstimmung der Beobachtungsdaten und (aktualisierten) Kartendaten steigen.

Nachfolgend werden bevorzugte Ausführungsformen der Erfindung und deren Weiterbildungen beschrieben, die jeweils, soweit dies nicht ausdrücklich oder technisch ausgeschlossen ist, beliebig miteinander kombiniert werden können.

Gemäß einer ersten bevorzugten Ausführungsform wird zur Initialisierung des Verfahrens wenigstens eine Hypothese aus solch einem Ausgangssatz von vorgegebenen Hypothesen ausgewählt. Diese wenigstens eine Hypothese dient im folgenden Rekursionsschritt als Eingangsgröße beim Schätzen des Konfidenzwerts mittels des rekursiven Schätzverfahrens.

Gemäß einer weiteren bevorzugten Ausführungsform erfolgt das sensorische Erfassen der Beobachtungsdaten, mittels Sensoren, die selbst Teil des Fahrzeugs bzw. daran oder darin angebracht sind. Solche Sensoren können insbesondere Geschwindigkeitssensoren, Beschleunigungssensoren, Kameras, Lidar-Sensoren, Radar-Sensoren und/oder Ultraschallsensoren sein. Bevorzugt sind die Sensoren konfiguriert bereits unmittelbar solche Daten zu liefern die als Beobachtungsdaten dienen können und anhand derer das Fahrzeugumfeld und/oder eine Bewegung des Fahrzeugs unmittelbar beschrieben werden kann (sog. high-level-Daten). Alternativ oder zusätzlich können die Sensoren auch konfiguriert sein, Rohdaten (sog. lowlevel-Daten) zu liefern, aus denen erst Beobachtungsdaten abgeleitet werden müssen, um etwa Objekte, insbesondere Fahrspurmarkierungen, andere Fahrzeuge und/oder Randbebauungen o.ä., zu erkennen und in Form von high-level-Daten zu kennzeichnen. Die Kartendaten werden bevorzugt einer, vorzugsweise ständig oder zumindest regelmäßig aktualisierten, Karte entnommen. Sowohl Beobachtungsdaten als auch Kartendaten erlauben unter anderem Rückschlüsse auf den weiteren Fahrbahnverlauf. Mittels des Verfahrens und der damit einhergehenden Fusion dieser beider Datenarten können besonders genaue und zuverlässige Fahrbahnmodelle erstellt werden.

Gemäß einer weiteren bevorzugten Ausführungsform geht durch das Schätzen des Konfidenzwerts mittels des rekursiven Schätzverfahrens eine Historie der Mehrzahl von Hypothesen in die Bewertung der Relevanz der Hypothesen des aktuellen Rekursionsschrittes mit ein. Eine relevante Hypothese entspricht dabei einem wahrscheinlichen Fahrbahnverlauf, wobei die Wahrscheinlichkeit durch den Konfidenzwert gegeben ist. Durch die Berücksichtigung der Historie der Mehrzahl von Hypothesen wird ein besonders zuverlässiges Schätzen des Konfidenzwerts ermöglicht.

Insgesamt wird dadurch, dass das Fahrbahnmodell aus einer Mehrzahl von Hypothesen anhand des durch rekursives Schätzen gewonnenen Konfidenzwerts eines Konfidenzmaßes bestimmt wird, die Vorhersage des Fahrbahnverlaufs besonders zuverlässig.

Gemäß einer weiteren bevorzugten Ausführungsform wird das rekursive Schätzen mittels eines Kalman-Filters durchgeführt. Dadurch kann der Schätzvorgang vorteilhaft in Echtzeit durchgeführt werden. Der Kalman-Filter ist zudem besonders für das rekursive Schätzen von Hypothesen basierend auf Hypothesen eines vorausgehenden Rekursionsschritts geeignet, weil er dabei direkt einen Konfidenzwert der geschätzten Hypothese, insbesondere deren Wahrscheinlichkeit, liefert. Bevorzugt berechnet sich der Konfidenzwert dabei aus der Wahrscheinlichkeit der mittels Messung erhaltenen Beobachtungsdaten bei gegebenen erwarteten Beobachtungsdaten bzw. Messergebnissen als die bedingte Wahrscheinlichkeit $P(z\_t \mid c\_{1:t})$, wobei $z\_t$ die Beobachtung bzw. Messung zum aktuellen Zeitpunkt t repräsentiert und $c\_{1:t}$ die Assoziationen zwischen Messungen und Elementen des zu schätzenden Fahrbahnmodells (Zustandsvektor) beinhaltet. In einer bevorzugten Weiterbildung ist das Kalman-Filter ein sog. unscented Kalman-Filter. Dadurch können auch nichtlineare Zusammenhänge in der Historie der Hypothesen und/oder den Eingangsgrößen berücksichtigt bzw. genähert und insbesondere Hypothesen besonders zuverlässig geschätzt werden. In einer anderen bevorzugten Weiterbildung ist das Kalman-Filter ein sog. extended Kalman-Filter.

Gemäß einer weiteren bevorzugten Ausführungsform wird beim Schritt des Auswählens einer der Hypothesen als Fahrbahnmodell für das Umfeld eines Fahrzeugs zum aktuellen Rekursionsschritt diejenige Hypothese mit dem besten, insbesondere dem höchsten, Konfidenzwert ausgewählt. So wird die Wahrscheinlichkeit maximiert, dass das Fahrbahnmodell dem realen Fahrbahnverlauf, zumindest im Wesentlichen, entspricht. Zudem kann die Auswahl der Hypothese auf diese Weise mit besonders geringem Rechenaufwand bewirkt werden, was dessen Echtzeitfähigkeit unterstützt.

Gemäß einer weiteren bevorzugten Ausführungsform wird beim Generieren der Mehrzahl verschiedener Hypothesen für das zu ermittelnde Fahrbahnmodell zumindest eine der Hypothesen aus dem vorangegangenen Rekursionsschritt in Abhängigkeit von den Beobachtungsdaten oder den Kartendaten in mehrere verschiedene Hypothesen für den aktuellen Rekursionsschritt rekursiv weiterentwickelt. Dabei wird die Weiterentwicklung bevorzugt anhand einer Schätzung, insbesondere durch Anwenden eines Kalman-Filters, durchgeführt. Vorzugsweise geht dabei eine mittels einer entsprechenden Parametrierung erzeugte unterschiedliche Assoziation der Beobachtungsdaten und/oder Kartendaten in die Weiterentwicklung ein, so dass die durch Anwendung des Kalman-Filters geschätzten Hypothesen des aktuellen Rekursionsschritts durch aktuelle Beobachtungsdaten und Kartendaten charakterisiert sind.

Trotz eines initial hohen Konfidenzwerts kann sich eine Hypothese im Laufe der Zeit, d.h. unter Weiterentwicklung mit ständig aktualisierten Beobachtungsdaten und Kartendaten, jedoch auch als falsch herausstellen. Durch die Weiterentwicklung mehrerer verschiedener Hypothesen kann in einem solchen Fall vorteilhaft für die Auswahl weiterer Fahrbahnmodelle in einem oder mehreren folgenden Rekursionsschritten auf eine andere der Mehrzahl verschiedener weiterentwickelter Hypothesen bzw. daraus durch Weiterentwicklung entstehenden Hypothesen für den Rekursionsschritt bzw. die folgenden Rekursionsschritte zurückgegriffen werden, insbesondere dann, wenn der Konfidenzwert der verschiedenen alternativen Hypothesen jenen der bisher wahrscheinlichsten Hypothesen erreicht oder überschreitet.

Gemäß einer weiteren bevorzugten Ausführungsform wird, um die Robustheit des Verfahrens zu erhöhen, die als Fahrbahnmodell des vorausgegangenen Rekursionsschritt ausgewählte Hypothese auch als Hypothese für den aktuellen Rekursionsschritt zur Verfügung gestellt, jedoch mit einer gegenüber dem vorausgegangenen Rekursionsschritt reduzierten, insbesondere einer diesbezüglich unterdurchschnittlichen, Wahrscheinlichkeit. Diese Hypothese wird dann im aktuellen Rekursionsschritt nur dann als Fahrbahnmodell ausgewählt, wenn die anderen Hypothesen des aktuellen Rekursionsschrittes demgegenüber unwahrscheinlicher sind, also auch absolut gesehen eine nur geringe Wahrscheinlichkeit aufweisen. Das kann insbesondere dann der Fall sein, wenn für solche Hypothesen die Assoziation der Beobachtungsdaten und Kartendaten fehlerhaft bzw. die Beobachtungsdaten und/oder die Kartendaten selbst fehlerhaft sind.

Gemäß einer weiteren bevorzugten Ausführungsform wird die Schätzung der Hypothesen im aktuellen Rekursionsschritt und/oder deren Weiterentwicklung in jeweils eine oder mehrere verschiedene Hypothesen für den nächsten Rekursionsschritt parallel auf einer Mehrzahl von Prozessoren oder Prozessorkernen durchgeführt. Bevorzugt entspricht dabei die Anzahl der parallel verwendeten Prozessoren bzw. Prozessorkerne der Anzahl der verschiedenen zu schätzenden bzw. bei der Weiterentwicklung zu erzeugenden Hypothesen. Dies ist möglich, da die unterschiedlichen Schätzungen bzw. Weiterentwicklungen vollkommen unabhängig voneinander sind und nur von der jeweiligen Assoziation der Beobachtungsdaten und Kartendaten abhängen. Dadurch kann das Fahrbahnmodell für das Umfeld eines Fahrzeugs besonders effizient ermittelt werden.

Gemäß einer weiteren bevorzugten Ausführungsform wird die zumindest eine Hypothese aus dem vorangegangenen Rekursionsschritt, die in eine oder mehrere Hypothesen für den aktuellen Rekursionsschritt weiterentwickelt wird, auf einem der folgenden Wege oder einer Kombination aus wenigstens zwei dieser Wege ausgewählt: (i) Filterung mittels eines statistischen Partikelfilters (ii) Anwenden eines Branch-and-Bound-Algorithmus (iii) Auswahl einer echten Untermenge von n Hypothesen aus der Menge der Hypothesen des vorangegangenen Rekursionsschritts, wobei die Hypothesen der Untermenge innerhalb der Menge der Hypothesen die $n$ besten Konfidenzwerte aufweisen mit $n \geqq 1$, vorzugsweise $n \geqq 2$. Gemäß bevorzugter Weiterbildungen dieser Ausführungsform kann optional vor der Auswahl gemäß einer oder einer Kombination mehrerer der Wege (i) bis (iii) als Weiterer Schritt eine Mustererkennung durchgeführt werden bezüglich der Konfidenzwertverteilung über die Menge der Hypothesen aus wenigstens einem dem vorangegangenen Rekursionsschritt noch vorgelagerten Rekursionsschritt und eine Entscheidung über die Weiterentwicklung dieser Hypothese des vorangegangenen Rekursionsschritts auf Basis eines bezüglich dieser Konfidenzwertverteilung erkannten Musters getroffen werden. Auf diese Weise kann die Anzahl der nachfolgend noch für die Auswahl einer oder mehrerer Hypothesenaus dem vorangegangenen Rekursionsschritt zu untersuchenden Hypothesen vorab reduziert werden, was insbesondere zu Effizienzgewinnen führen kann. Insbesondere kann dabei ein Teil der Historie der Hypothesen identifiziert werden, in den fehlerhafte und/oder unzuverlässige Eingangsgrößen eingegangen sind. Dies kann bei der Weiterentwicklung von Hypothesen berücksichtigt werden, insbesondere indem solche Hypothesen, die auf fehlerhaften und/oder unzuverlässigen Eingangsgrößen basieren, verworfen bzw. nicht für eine Weiterentwicklung beachtet werden. Dadurch kann die Menge der Hypothesen, die weiterentwickelt werden sollen, vorteilhaft verringert werden, ohne die Qualität der Fahrbahnmodellermittlung wesentlich negativ zu beeinflussen.

Durch ein, bevorzugt kontinuierliches bzw. regelmäßiges Aussortieren von Hypothesen, die nicht mehr weiterentwickelt werden, insbesondere durch Verwendung einer oder mehrere der vorgenannten Varianten (i) bis (iii), kann vorteilhaft die Komplexität bzw. Breite des sich rekursiv entwickelnden Hypothesenbaums und somit auch der für die weiteren Rekursionsschritte erforderliche Aufwand, insbesondere Rechen- und Speicheraufwand, effektiv begrenzt werden.

Bei der Variante (i) mit einer Auswahl einer oder mehrerer Hypothesen durch die Filterung mittels eines statistischen Partikelfilters werden die eine bzw. mehrere Hypothesen zufällig aus der Menge der Hypothesen des vorangegangenen Rekursionsschritts ausgewählt, wobei die Wahrscheinlichkeit, dass eine bestimmte Hypothese ausgewählt wird, insbesondere proportional zu ihrem Konfidenzwert sein kann. Mit einem solchen Partikelfilter können auch nichtlineare Zusammenhänge in der Historie und/oder der Eingangsgrößen verarbeitet werden.

Bei der Variante (ii) wird eine Auswahl werden mehrere Hypothesen durch das Anwenden eines aus dem Stand der Technik bekannten Branch-and-Bound-Algorithmus ausgewählt. Bei derartigen Algorithmen wird regelmäßig ein erlaubter Bereich, d.h. hier eine Menge von Hypothesen eines Rekursionsschritts, nach und nach in mehrere Teilmengen aufgespalten (Branch). Mittels geeigneter Schranken (Bound) wird sodann eine möglichst große Anzahl suboptimaler Belegungen (Hypothesen) frühzeitig erkannt und ausgesondert, so dass der zu durchsuchende Lösungsraum für nachfolgende Operationen, d.h. hier die Anzahl weiterzuentwickelnden Hypothesen, klein gehalten wird.

Bei der Variante (iii) mit einer Auswahl und Weiterentwicklung einer echten Untermenge von n Hypothesen aus der Menge der Hypothesen des vorangegangenen Rekursionsschritts auch Hypothesen ausgewählt und weiterentwickelt, die das Potenzial aufweisen, in einem zukünftigen Rekursionsschritt einen hohen, insbesondere den höchsten, Konfidenzwert aufzuweisen. Weil dabei mehrere Hypothesen weiterentwickelt werden, wird dies auch als "Multihypothesen-Tracking" bezeichnet. Dadurch kann die Schätzung des Fahrbahnmodels besonders robust gestaltet werden. Insbesondere kann dabei ein Teil der Historie der Hypothesen identifiziert werden, in den fehlerhafte und/oder unzuverlässige Eingangsgrößen eingegangen sind. Dies kann bei der Weiterentwicklung von Hypothesen berücksichtigt werden, insbesondere indem solche Hypothesen, die auf fehlerhaften und/oder unzuverlässigen Eingangsgrößen basieren, verworfen bzw. nicht für eine Weiterentwicklung beachtet werden. Dadurch kann die Menge der Hypothesen, die weiterentwickelt werden sollen, vorteilhaft verringert werden, ohne die Qualität der Fahrbahnmodellermittlung wesentlich negativ zu beeinflussen.

Gemäß einer weiteren bevorzugten Ausführungsform weisen die sensorisch erfassten Beobachtungsdaten wenigstens eines der folgenden Objekte auf: eine Fahrspurmarkierung, eine Randbebauung, ein feststehendes und/oder bewegtes Hindernis. Vorteilhaft können die Beobachtungsdaten zu einem, insbesondere dynamischen, Umfeldmodell zusammengefasst werden, in welchem kurzfristige Änderungen des realen Fahrbahnverlaufs, insbesondere durch Baustellen und/oder Fahrbahnsperrungen, berücksichtigt sind. Bevorzugt können anhand der Historie der Hypothesen und der Beobachtungsdaten solche Hypothesen identifiziert und ausgeschlossen werden, welche auf falschen, insbesondere nicht aktuellen, Kartendaten basieren.

Gemäß einer weiteren bevorzugten Ausführungsform erfolgt das Erzeugen unterschiedlicher Assoziationen der jeweils als Eingangsgrößen der Zustandsfunktion dienenden Beobachtungsdaten und Kartendaten und somit der verschiedenen Hypothesen durch verschiedene Gewichtungen und/oder Auswahlen dieser Eingangsgrößen mittels der Parametrisierung der Zustandsfunktion. Dadurch können, insbesondere bei der Weiterentwicklung von Hypothesen aus einem vorausgehenden Rekursionsschritt, verschiedene Modelle des Umfelds des Fahrzeugs abgebildet und jeweils mittels des Konfidenzmaßes bewertet werden. Dadurch wird eine Mehrzahl von möglichen Fahrbahnmodellen parallel beschrieben. Es ist aber auch möglich, dass unterschiedliche Assoziationen der Beobachtungsdaten und Kartendaten in gleichen Hypothesen für ein Fahrbahnmodell resultieren. Bevorzugt, werden in diesem Fall diese gleichen Hypothesen zu einer einzigen Hypothese zusammengefasst, insbesondere zu einer Hypothese mit einem besonders hohen Konfidenzwert.

Gemäß einer weiteren bevorzugten Ausführungsform beträgt die Ortsauflösung der Kartendaten mindestens 25 cm, vorzugsweise mindestens 15 cm, besonders vorzugsweise mindestens 10 cm. Das bedeutet, dass die Kartendaten Strukturen bzw. Objekte, deren Abmessung zumindest in einer Dimension mindestens der jeweiligen Mindestortsauflösung entspricht, durch die Kartendaten repräsentiert werden können bzw. das solche Objekte und Strukturen mit der entsprechenden Genauigkeit repräsentiert werden können. Beispielsweise ist bei einer Ortsauflösung von 25 cm der Fahrbahnverlauf mit einer der Ortsauflösung entsprechenden Genauigkeit von 25 cm durch die Kartendaten abgebildet. Dementsprechend sind auf derart genauen Kartendaten basierende Hypothesen besonders geeignet ausreichend genaue und verlässliche Fahrbahnmodelle zu liefern.

Gemäß einer weiteren bevorzugten Ausführungsform werden die ermittelten Fahrbahnmodelle zum zumindest teilautomatisierten, vorzugsweise hochautomatisierten oder autonomen Fahren des Fahrzeugs verwendet. Aufgrund der hohen Zuverlässigkeit des in jedem Rekursionsschritt geschätzten Fahrbahnmodells und/oder den mehreren pro Rekursionsschritt weiterentwickelten Hypothesen kann das Fahrzeug besonders sicher bzw. flexibel geführt werden.

Gemäß einer weiteren bevorzugten Ausführungsform werden, insbesondere beim zumindest teilautomatisierten, vorzugsweise hochautomatisierten oder autonomen Fahren, erfolgt die Schätzung des Konfidenzwertes und/oder die Weiterentwicklung mindestens einer aktuellen Hypothesen in eine oder mehrere Hypothesen für den nächsten Rekursionsschritt nur auf Basis der Kartendaten, wenn erkannt wird, dass die Beobachtungsdaten nicht verfügbar oder fehlerhaft sind. Dies ist insbesondere dann vorteilhaft, wenn die Beobachtungsdaten oder zumindest ein Teil der Beobachtungsdaten etwa aufgrund eines Sensorausfalls oder -defekts nicht oder nur fehlerbehaftet zur Verfügung stehen. Vorzugsweise kann das Fahrzeug anhand einer als Fahrbahnmodell ausgewählten, ausschließlich oder zumindest im Wesentlichen auf Kartendaten basierenden Hypothese, in einen sicheren Zustand überführt werden, insbesondere die Geschwindigkeit des Fahrzeugs verringert und/oder ein Nothalt durchgeführt werden, bei dem das Fahrzeug zum Stillstand kommt, insbesondere, soweit vorhanden auf einem Seitenstreifen oder einem anderen als sicher einzustufenden Fahrbahnbereich, wie etwa einem nahen Parkplatz.

Ein zweiter Aspekt der Erfindung betrifft ein Verfahren zum Steuern eines Fahrzeugs mit den Schritten: Ermitteln wenigstens eines Fahrbahnmodells gemäß dem Verfahren gemäß dem ersten Aspekt der Erfindung, insbesondere gemäß einer oder mehrerer der hierin beschriebenen Ausführungsformen und Weiterbildungen dazu; und Steuern des Fahrzeugs im Rahmen eines teilautomatisierten, hochautomatisierten oder autonomen Fahrbetriebs des Fahrzeugs auf Basis des wenigstens einen ermittelten Fahrbahnmodells. So können die ermittelten Fahrbahnmodelle zur Implementierung von automatisiertem Fahren von Fahrzeugen, insbesondere Kraftfahrzeugen, vorteilhaft verwendet werden.

Gemäß einer bevorzugten Ausführungsform werden die ermittelten Fahrbahnmodelle nur auf vorgegebenen Strecken zum zumindest teilautomatisierten, vorzugsweise hochautomatisierten oder autonomen Fahren des Fahrzeugs verwendet. Die Auswahl der vorgegebenen Strecken kann dabei insbesondere abhängig vom Streckentyp (etwa Autobahn, Landstraße, Ortsstraße o.ä.) und von der Qualität des dafür verfügbaren Kartenmaterials erfolgen. Auf diese Weise kann das erforderliche Sicherheitsniveau für das automatisierte Fahren gewährleistet werden, da ungeeignete Streckenabschnitte manuell oder jedenfalls mit einem zu einem geringeren Grad automatisierten Fahrbetriebsmodus gefahren werden müssen, so dass der Fahrer selbst die erforderliche zusätzliche Sicherheit leisten kann, wenn diese nicht allein in einem automatisierten Fahrbetrieb auf Basis der ermittelten Fahrbahnmodelle möglich ist oder erscheint.

Ein dritter Aspekt der Erfindung betrifft eine Vorrichtung zum Ermitteln eines Fahrbahnmodells für das Umfeld eines Fahrzeugs mittels rekursiven Schätzens. Sie weist eine Sensorvorrichtung zur Erfassung von Beobachtungsdaten, die das Umfeld des Fahrzeugs oder dessen Bewegung kennzeichnen, und einen Speicher zum Speichern von Kartendaten, die das Umfeld des Fahrzeugs kennzeichnen, sowie eine Verarbeitungseinheit, die zum Ausführen des Verfahrens gemäß dem ersten Aspekt der Erfindung eingerichtet ist, auf.

Gemäß einer bevorzugten Ausführungsform weist die Vorrichtung eine Kommunikationseinheit auf, welche dazu eingerichtet ist, Hypothesen für das zu ermittelnde Fahrbahnmodell und/oder Beobachtungsdaten an eine zentrale Infrastruktur, etwa einen zentralen Server, zu senden und von dieser zentralen Infrastruktur Hypothesen zu empfangen. Dabei ist die Verarbeitungseinheit dazu eingerichtet, die empfangenen Hypothesen bei der Auswahl einer der Hypothesen als Fahrbahnmodell für das Umfeld des Fahrzeugs mit einzubeziehen. Vorzugsweise wurden die von der Vorrichtung empfangenen Hypothesen zuvor von anderen Fahrzeugen an die zentrale Infrastruktur gesendet, so dass diese Hypothesen insbesondere auf einem Umfeldmodell der anderen Fahrzeuge basieren. Alternativ oder zusätzlich können die empfangenen Hypothesen auch von der zentralen Infrastruktur basierend auf Beobachtungsdaten, die insbesondere von anderen Fahrzeugen an die zentrale Infrastruktur gesendet wurden, generiert werden. In der Gesamtheit der von dem bzw. über die zentrale Infrastruktur übertragenen Hypothesen wird der reale Fahrbahnverlauf mit besonders hoher Wahrscheinlichkeit durch eine der Hypothesen wiedergegeben. Durch das Konzentrieren von Informationen durch Hypothesen und/oder Beobachtungsdaten in der zentrale Infrastruktur weisen die von der zentralen Infrastruktur übertragenen Hypothesen besonders hohe Konfidenzwerte auf.

Wie schon im Zusammenhang mit dem Verfahren gemäß dem ersten Aspekt der Erfindung, bzw. einer seiner Ausführungsformen im Einzelnen beschrieben, kann die zentrale Infrastruktur zugleich auch zur zentralen Bereitstellung der Kartendaten dienen und diese einer Vielzahl von Fahrzeugen zur Verfügung stellen sowie gegebenenfalls Korrekturinformationen zu den Kartendaten von diesen erhalten, um darauf beruhend Aktualisierungen der Kartendaten vorzunehmen. Dementsprechend ist die Vorrichtung gemäß einer bevorzugten Weiterbildung auch eingerichtet, über die Kommunikationseinheit Informationen an eine solche zentrale Infrastruktur zu senden, die einen Aktualisierungsbedarf der Kartendaten angeben und bevorzugt auch erfasste Beobachtungsdaten oder daraus abgeleitete Aktualisierungsinformationen enthalten, auf deren Basis eine Aktualisierung der Karte erfolgen kann.

Ein vierter Aspekt der Erfindung betrifft schließlich ein Fahrzeug, das eingerichtet ist, das Verfahren gemäß dem ersten Aspekt der Erfindung, insbesondere gemäß einer oder mehrerer der hierin beschriebenen Ausführungsformen und Weiterbildungen dazu, auszuführen. Dazu kann das Fahrzeug insbesondere eine Vorrichtung gemäß dem dritten Aspekt der Erfindung, insbesondere gemäß dessen hierin beschriebenen bevorzugten Ausführungsformen, aufweisen.

Die in Bezug auf den ersten Aspekt der Erfindung und dessen vorteilhafte Ausgestaltung beschriebenen Merkmale und Vorteile gelten entsprechend auch für den zweiten bis vierten Aspekt der Erfindung und dessen vorteilhafte Ausgestaltung.

Weitere Merkmale, Vorteile und Anwendungsmöglichkeiten der Erfindung ergeben sich aus der nachfolgenden Beschreibung im Zusammenhang mit den Figuren. Dabei zeigt:

Fig. 1    eine schematische Darstellung eines Beispiels für das Verfahren zum Ermitteln eines Fahrbahnmodells; und

Fig. 2    eine schematische Darstellung eines Beispiels für eine Vorrichtung zum Ermitteln eines Fahrbahnmodells.

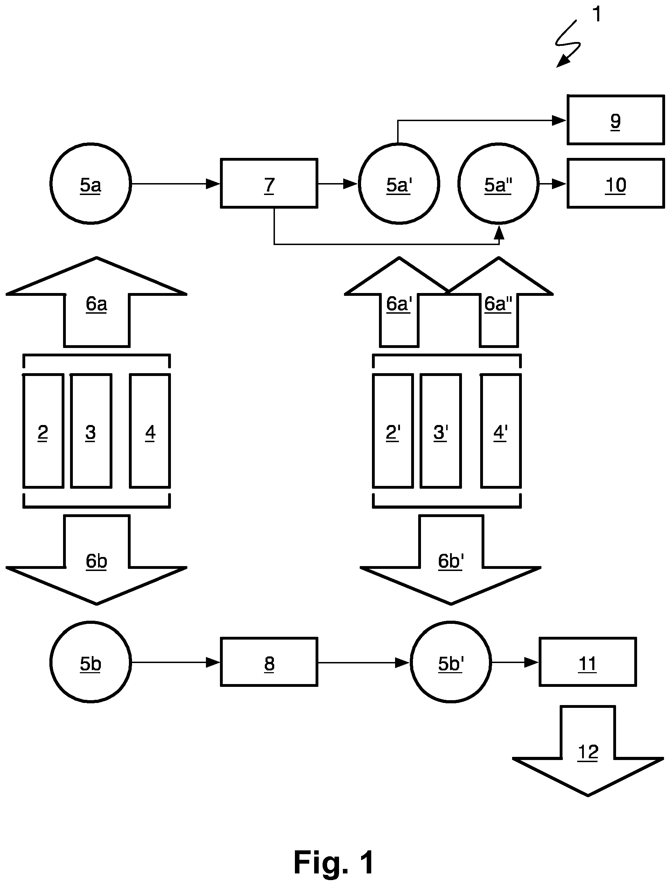

**Fig. 1** zeigt ein schematisches Diagramm zur Illustration eines Verfahrens 1 zum Ermitteln eines Fahrbahnmodells, gemäß einer bevorzugten Ausführungsform der Erfindung. Dabei werden sensorisch erfasste Beobachtungsdaten 2, 3 und Kartendaten 4 mittels unterschiedlicher Assoziationen 6a und 6b der Beobachtungsdaten 2, 3 und Kartendaten 4 fusioniert. Diese Fusionierung wird jeweils mittels einer Zustandsschätzung, insbesondere mittels einer Zustandsfunktion 5a bzw. 5b, erreicht, für welche die Beobachtungsdaten 2, 3 und Kartendaten 4 als, insbesondere parametrierbare, Eingangsgrößen dienen. Daraus ergeben sich über unterschiedliche Parametrierungen und somit Assoziationen 6a bzw. 6b unterschiedliche Hypothesen 7 und 8 für ein zu ermittelndes Fahrbahnmodell. Die Hypothesen 7, 8 werden in einem Rekursionsschritt unter Einbeziehung aktualisierter Beobachtungsdaten 2', 3' und Kartendaten 4' in aktualisierte Hypothesen 9, 10, 11 weiterentwickelt, wobei sich eine Hypothese 7 in mehrere Hypothesen 9, 10 verzweigen kann.

Die Beobachtungsdaten 2, 3 basieren auf der Erfassung des Umfelds des Fahrzeugs durch wenigstens einen Sensor, insbesondere durch Kameras, Radarsensoren, Lidarsensoren und/oder Ultraschallsensoren. Die Beobachtungsdaten 2, 3 beschreiben sensorisch erfasste Objekte, insbesondere Fahrspurmarkierungen, andere Fahrzeuge und/oder Randbebauungen etc..

Die Kartendaten 4 bzw. 4' betreffen kartografische Informationen aus einer Karte, die den Fahrbahnverlauf, insbesondere die Fahrspurmarkierungen und idealerweise auch Randbebauungen, wiedergibt. Bevorzugt ist die Karte eine hoch-genaue Karte, insbesondere mit einer Ortsauflösung, insbesondere Genauigkeit der relativen Anordnung der Elemente, wie etwa Fahrspuren oder Randbebauungen, der durch die Kartendaten repräsentierten Karte, die besser ist als 25 cm, vorzugsweise besser als 15 cm, besonders vorzugsweise besser als 10 cm.

Die fusionierten Beobachtungsdaten 2, 3 und Kartendaten 4 stellen somit eine Basis zur Interpretation des Umfelds des Fahrzeugs dar. Entsprechend können unterschiedliche Assoziationen 6a, 6b der Beobachtungsdaten 2, 3 und Kartendaten 4 unterschiedliche oder aber auch gleiche bzw. sich nur unwesentlich unterscheidende Interpretationen des Umfelds des Fahrzeugs, d.h. Hypothesen dazu ergeben.

Dies soll durch das folgende Beispiel für die Erzeugung unterschiedlicher Hypothesen illustriert werden:
Ein Fahrzeug befinde sich auf einer Straße mit zwei Fahrspuren in Fahrtrichtung des Fahrzeugs. Laut den einer Karte entnommenen Kartendaten 4 verläuft die Straße, d.h. verlaufen die zwei für das Fahrzeug befahrbaren Fahrspuren, geradeaus. Eine Baustelle auf der linken Fahrspur in Fahrtrichtung des Fahrzeugs wird von den Sensoren des Fahrzeugs als ein feststehendes Objekt auf der linken Fahrspur registriert. Da die Baustelle auf der Karte nicht eingezeichnet ist, sind die Beobachtungsdaten 2, 3 und die Kartendaten 4 widersprüchlich.

Eine erste Assoziation 6a der Beobachtungsdaten 2, 3 mit den Kartendaten 4 resultiert in einer ersten Hypothese 7, die eine zweispurige, geradeaus verlaufende Straße repräsentiert. Eine zweite, unterschiedliche Assoziation 6b der Beobachtungsdaten 2, 3 mit den Kartendaten 4 resultiert in einer zweiten Hypothese 8, die eine einspurige, geradeaus verlaufende Straße repräsentiert, bei der die durch das Objekt versperrte Fahrspur nicht vorhanden ist. Die beiden unterschiedlichen Assoziationen 6a und 6b werden dabei über eine entsprechende Parametrierung der Beobachtungsdaten 2, 3 und Kartendaten 4, insbesondere durch unterschiedliche Gewichtung dieser Daten in der jeweiligen Parametrisierung 5a, 5b der Zustandsfunktion erreicht. Die Parametrisierung kann insbesondere in Form einer Gewichtung der als ihre Eingangsgrößen dienenden Daten 2, 3 und 4 erfolgen. Dabei ist insbesondere auch ein Gewichtungsszenario möglich, bei dem bei der ersten Assoziation 6a die Beobachtungsdaten 2, 3 mit einem Gewicht von null oder zumindest im Wesentlichen null versehen und somit praktisch unberücksichtigt bleiben, während die Kartendaten 4 mit einem Gewicht von eins oder zumindest im Wesentlichen eins versehen werden und somit zumindest im Wesentlichen die Hypothese bestimmen. Für die zweite Assoziation 6b dagegen können in diesem Szenario in umgekehrter Weise die Beobachtungsdaten 2, 3 mit einem Gewicht von eins oder zumindest im Wesentlichen eins versehen sein und somit zumindest im Wesentlichen die Hypothese bestimmen, während die Kartendaten 4 mit einem Gewicht von null oder zumindest im Wesentlichen null versehen werden und somit praktisch unberücksichtigt bleiben. In anderen Szenarien weisen dagegen sowohl die Beobachtungsdaten, jedenfalls ein Teil davon, als auch die Kartendaten jeweils eine Gewichtung bzw. Einbindung in die Assoziation auf, bei der sie die resultierende Hypothese mitbestimmen.

Vorzugsweise enthält eine Hypothese 7, 8 mehr Information als nur den vorhergesagten Fahrbahnverlauf. Eine Hypothese 7, 8 bzw. das durch Auswahl einer Hypothese bestimmte Fahrbahnmodell kann insbesondere neben Klothoidenparametern, welche den Verlauf der Fahrbahn charakterisieren, auch Spurbreiteninformation aller Fahrspuren und/oder Informationen zur Fahrzeugposition auf der Fahrbahn, (beispielsweise auf welcher Fahrspur sich das Fahrzeug befindet) und/oder zur Fahrzeugausrichtung auf der Fahrbahn (beispielsweise unter welchem (Gier-) Winkel sich das Fahrzeug gegenüber der oder den Fahrspuren bewegt) aufweisen. Ferner enthält eine Hypothese 7, 8 bzw. das entsprechende Fahrbahnmodell bevorzugt auch Information über den Fahrzeugzustand, insbesondere dessen Geschwindigkeit und/oder Beschleunigung, und/oder Information über andere Fahrzeuge (Fahrzeugpositionen, Fahrzeugausrichtungen, Fahrzeugzustände).

Im Rahmen des Verfahrens kann verallgemeinert eine i-te Hypothese als ein Tripel von Information

$$h_t^{(i)}$$

dargestellt werden, insbesondere durch

$$h_t^{(i)} = \left( \mu_{t^{(i)}}^{(i)}, \Sigma_{t^{(i)}}^{(i)}, P\left( z_{1:t^{(i)}} | c_{1:t^{(i)}}^{(i)} \right) \right).$$

Dabei sind $\mu_{t^{(i)}}^{(i)}$ und $\Sigma_{t^{(i)}}^{(i)}$ der Mittelwert und die Kovarianz der Hypothese zur Zeit $t^{(i)}$, und $P\left( z_{1:t^{(i)}} | c_{1:t^{(i)}}^{(i)} \right)$ gibt die Wahrscheinlichkeit der Hypothese an, wobei $z_{1:t^{(i)}}$ die in die Historie der (vorausgegangenen) Hypothesen eingegangenen Messungen (Beobachtungsdaten und Kartendaten) sind und c_{1:t} die Assoziationen zwischen Messungen und Elementen des zu schätzenden Fahrbahnmodells (Zustandsvektor) beinhaltet und somit letztlich die Hypothese identifiziert.

Die beiden Hypothesen 7, 8 werden parallel weiterentwickelt. Dabei werden neue, aktuelle Beobachtungsdaten 2', 3' und Kartendaten 4' (die in der Regel einen aufgrund der Fahrt unterschiedlichen Kartenausschnitt bzw. Fahrbahnabschnitt betreffen und sich daher von den Kartendaten 4 unterscheiden können) mittels unterschiedlicher Assoziationen 6a' und 6b' fusioniert, so dass sich wieder diesen Assoziationen entsprechende Zustandsfunktionen 5a' bzw. 5b' ergeben. Die Weiterentwicklung der Hypothesen 7, 8 wird bevorzugt jeweils durch einen Kalman-Filter realisiert, der einen resultierenden Zustand (hier z.B.: Hypothese 11) unter Einbeziehung von aktuellen Messwerten (hier: assoziierte Beobachtungsdaten 2', 3' und Kartendaten 4) aus einem vorangehenden Zustand (hier: Hypothese 8), d.h. rekursiv, schätzt.

Abhängig von der vorausgegangenen Hypothese 7 können bei einer Weiterentwicklung derselben mehrere unterschiedliche resultierende Hypothesen 9, 10 aus der vorausgegangenen Hypothese 7 gebildet werden. Dies lässt sich abermals an dem oben herangezogenen Beispiel illustrieren: Das Fahrbahnmodell der ersten Hypothese 7 legt eine zweispurige, geradeaus verlaufende Straße zu Grunde. Neue Beobachtungsdaten 2', 3' weisen wie schon bei der vorausgegangenen Messung im Schritt zuvor immer noch auf ein Hindernis auf der linken Fahrspur hin. Die erste Assoziation 6a' der aktuellen Daten 2', 3' und 4', bei der die Beobachtungsdaten 2', 3' in der Zustandsfunktion 5a' stärker gewichtet sind als die Kartendaten 4', resultiert in einer ersten aktuellen Hypothese 9, wobei das resultierende Fahrbahnmodell ein auf der linken Fahrspur sehr langsam fahrendes oder stehendes Objekt anzeigt. Eine zusätzliche zweite unterschiedliche Assoziation 6a" der aktuellen Daten 2', 3' und 4', bei der jedoch die Kartendaten stärker gewichtet sind als in der ersten Assoziation 6a', resultiert entsprechend in einer zweiten neuen Hypothese 10, wobei das resultierende Fahrbahnmodell weiterhin eine zweispurige, geradeaus verlaufende Straße ist. Beide Hypothesen 9 und 10 sind jedoch rekursiv mittels eines Kalman-Filters aus der gemeinsamen früheren Hypothese 7 rekursiv weiterentwickelt worden, anders als die Hypothese 11, die aus Hypothese 8 hervorgegangen ist.

Die Anwendung des Kalman-Filters liefert auch einen Konfidenzwert bezüglich eines vorbestimmten Konfidenzmaßes, der insbesondere angibt, wie zuverlässig sich eine vorausgegangene Hypothese 7, 8 in eine neue Hypothese 9, 10 bzw. 11 weiterentwickeln lässt, d.h. wie gut bzw. genau die Schätzung der neuen Hypothese 9, 10, 11 mit der vorhergehenden Hypothese 7, 8 als Ausgangszustand und einer Assoziation der neuen Beobachtungsdaten 2', 3' und Kartendaten 4' als neue Messwerte ist.

Der Konfidenzwert kann daher zur Auswahl eines Fahrbahnmodells 12 aus den aktuellen Hypothesen herangezogen werden. Insbesondere kann diejenige neue bzw. aktuelle Hypothese 9, 10, 11 als Fahrbahnmodell ausgewählt werden, welche den im Vergleich zu den anderen Hypothesen höchsten Konfidenzwert aufweist.

Durch das mit einem solchen Verfahren 1 ermittelte Fahrbahnmodell kann ein Fahrzeug sicher hochautomatisch, d.h. autonom, über eine Fahrbahn, insbesondere eine mehrspurige Fahrbahn wie etwa eine Autobahn, geführt werden. Dabei kann das ermittelte Fahrbahnmodell in einer Ausführung nur die Schätzung des Fahrbahnverlaufs und/oder der Randbebauung, d.h. Fahrbahnumgebung, aufweisen. Alternativ oder zusätzlich kann das ermittelte Fahrbahnmodell auch eine Schätzung der dynamischen Umgebung, insbesondere andere Fahrzeuge, Fußgänger, etc., aufweisen.

Durch das Verfahren 1 werden die Anforderungen an eine, insbesondere hoch-genaue, Karte reduziert. Durch den geringeren Detailierungsgrad kann auch die Aktualisierung einer Karte vereinfacht werden. Insbesondere kann die benötigte Sicherheitslast der Karte, die benötigte Auflösung und der benötigte Informationsgehalt, und damit auch der benötigte Speicherbedarf sowie Übertragungszeiten der Kartendaten, reduziert bzw. bei gleicher Auflösung bzw. gleichem Informationsgehalt eine noch zuverlässigere und ggf. genaurere Fahrbahnmodellschätzung erreicht werden.

Durch das Verfahren 1 kann andererseits auch eine Verbesserung gegenüber einer rein Sensor-basierten Fahrbahnmodellschätzung erreicht werden, da die Reichweite des geschätzten Fahrbahnmodells über den Erfassungsbereich der Sensoren hinaus erhöht wird und mehr Semantik (Fahrspurtyp, Fahrbahnmarkierungstyp, Geschwindigkeitsbegrenzung, Verkehrsregeln, Navigationsinformation) in die Fahrbahnmodellschätzung eingehen kann.

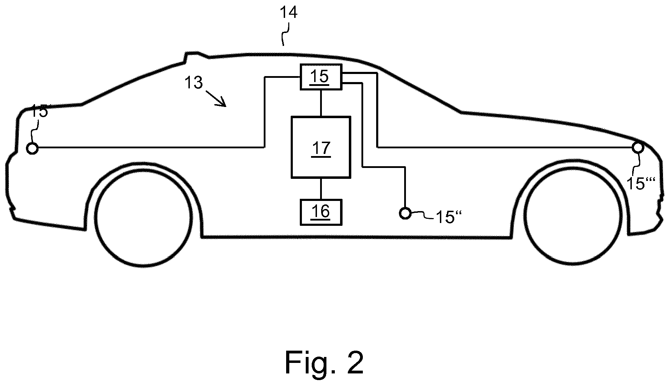

**Fig. 2** zeigt eine schematische Darstellung eines Beispiels für eine Vorrichtung 13 zum Ermitteln eines Fahrbahnmodells, die in einem Fahrzeug 14 angeordnet ist. Über das Fahrzeug 14 hinweg sind mehrere Sensoren 15', 15", 15''' verteilt, die Teil einer Sensorvorrichtung 15 sind. Die Sensorvorrichtung 15 ist, ebenso wie ein Speicher 16 zum Speichern von Kartendaten, mit einer Verarbeitungseinheit 17 verbunden. Über die Verbindungen können Beobachtungsdaten und Kartendaten an die Verarbeitungseinheit 17 übertragen werden.

Der Speicher 16 enthält eine oder mehrere, vorzugsweise hoch-genaue, Karten. Die Karten zeigen den Straßenverlauf und/oder den Fahrspurverlauf und/oder die Fahrspurbreiten und/oder die Randbebauung, vorzugsweise mit einer Genauigkeit besser als 25 cm, weiter vorzugsweise besser als 15 cm, besonders bevorzugt besser als 10 cm. Aus den Karten entnommene Kartendaten kennzeichnen dadurch das Umfeld des Fahrzeugs. Anhand der Kartendaten kann insbesondere der weitere Fahrbahnverlauf auf mehreren hundert Metern oder Kilometern bestimmt oder zumindest geschätzt werden.

Die Sensoren 15', 15", 15''' der Sensorvorrichtung 15 sind dazu eingerichtet, das Umfeld des Fahrzeugs zu erfassen, insbesondere in Bildform aufzunehmen und/oder abzutasten. Die Sensoren 15', 15", 15''' können als Kamera, Radarsensor, Lidarsensor. Ultraschallsensor, Beschleunigungssensor, Geschwindigkeitssensor o.ä. ausgebildet sein und erfassen die Bewegung des Fahrzeugs, insbesondere dessen Beschleunigung und Geschwindigkeit o.ä., sowie Objekte, insbesondere Fahrbahnmarkierungen, andere Fahrzeuge und/oder Randbebauungen o.ä. in bis zu 200 m. Aus den von diesen Sensoren 15', 15", 15''' ermittelten Daten lassen sich, gegebenenfalls nach Weiterverarbeitung, Beobachtungsdaten gewinnen, die ein Umfeld des Fahrzeugs kennzeichnen. Da die Beobachtungsdaten ständig neu generiert werden, ist das durch die Beobachtungsdaten gekennzeichnete Umfeld des Fahrzeugs besonders aktuell.

Die Verarbeitungseinheit 17 ist dazu eingerichtet, insbesondere gemäß dem im Zusammenhang mit Fig. 1 beschriebenen Verfahren, eine Mehrzahl verschiedener Hypothesen für das zu ermittelnde Fahrbahnmodell anhand unterschiedlicher Assoziationen der Beobachtungsdaten und Kartendaten zu generieren sowie für jede der Hypothesen einen Konfidenzwert bezüglich eines Konfidenzmaßes zu schätzen, wobei vorangehende Hypothesen als Eingangsgrößen der Schätzung dienen. Die Verarbeitungseinheit 17 ist auch dazu eingerichtet, eine der Hypothesen als Fahrbahnmodell auszuwählen, insbesondere diejenige Hypothese mit dem höchsten Konfidenzwert.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zu Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand abgewichen wird.

Bezugszeichenliste

| | |
|---|---|
| 1 | Verfahren zur Fahrbahnermittlung |
| 2, 3 | Beobachtungsdaten zu einem ersten Rekursionsschritt |
| 4 | Kartendaten zum ersten Rekursionsschritt |
| 2', 3' | Beobachtungsdaten zu einem zweiten Rekursionsschritt |
| 4' | Kartendaten zum ersten Rekursionsschritt |
| 5a, b | Zustandsfunktionen zum ersten Rekursionsschritt |
| 5a',a",b' | Zustandsfunktionen zum zweiten Rekursionsschritt |
| 6a, b | Assoziationen zum ersten Rekursionsschritt |
| 6a',a",b' | Assoziationen zum zweiten Rekursionsschritt |
| 7, 8 | Hypothesen zum ersten Rekursionsschritt |
| 9, 10, 11 | Hypothesen zum zweiten Rekursionsschritt |
| 12 | Auswahl der Hypothese 11 als Fahrbahnmodell für den zweiten Rekursionsschritt |

**Patentansprüche**

1. Verfahren (1) zum Ermitteln eines Fahrbahnmodells für das Umfeld eines Fahrzeugs (14) mittels rekursiven Schätzens, wobei jede Rekursion die folgenden Schritte aufweist:

    Sensorisches Erfassen von Beobachtungsdaten, die das Umfeld des Fahrzeugs (14) oder dessen Bewegung kennzeichnen;
    Erfassen von Kartendaten, welche das Umfeld des Fahrzeugs (14) kartografisch kennzeichnen;
    Generieren einer Mehrzahl verschiedener Hypothesen (9-11) für das zu ermittelnde Fahrbahnmodell gemäß einer parametrisierten Zustandsfunktion, wobei jede der Hypothesen (9-11) ein mögliches Fahrbahnmodell für den aktuellen Rekursionsschritt darstellt und durch eine mittels einer entsprechenden Parametrierung erzeugten unterschiedliche Assoziation (6) der jeweils als Eingangsgrößen der Zustandsfunktion dienenden Beobachtungsdaten (2, 3) und Kartendaten (4) gekennzeichnet ist;
    Schätzen eines Konfidenzwerts bezüglich eines vorbestimmten Konfidenzma-ßes für jede der Hypothesen (9-11) des aktuellen Rekursionsschritts mittels eines rekursiven Schätzverfahrens unter Einbeziehung wenigstens einer Hypothese (7, 8) aus dem vorausgegangenen Rekursionsschritt als eine Eingangsgröße;
    Auswählen (12), auf Basis der geschätzten Konfidenzwerte, einer der Hypothesen (9-11) als Fahrbahnmodell für das Umfeld eines Fahrzeugs (14) zum aktuellen Rekursionsschritt;
    **gekennzeichnet durch,**
    Feststellen, auf Basis der Konfidenzwerteverteilung, ob für mehrere aufeinanderfolgende Rekursionsschritte, die Hypothesen mit den besten Konfidenzwerten regelmäßig signifikant von den Kartendaten (4) abweichen; und
    falls dies der Fall ist Korrigieren der Kartendaten (4) auf Basis des ausgewählten Fahrbahnmodells für diesen Rekursionsschritt und/oder Melden der Nichtaktualität der Kartendaten an eine zentrale Infrastruktur zur Bereitstellung der Kartendaten.

2. Verfahren (1) nach Anspruch 1, wobei das rekursive Schätzen mittels eines Kalman-Filters durchgeführt wird.

3. Verfahren (1) nach einem der vorangehenden Ansprüche, wobei beim Schritt des Auswählens (12) einer der Hypothesen (9-11) als Fahrbahnmodell für das Umfeld eines Fahrzeugs (14) zum aktuellen Rekursionsschritt, diejenige Hypothese (11) mit dem besten Konfidenzwert ausgewählt wird.

4. Verfahren (1) nach einem der vorangehenden Ansprüche, wobei beim Generieren der Mehrzahl verschiedener Hypothesen (9-11) für das zu ermittelnde Fahrbahnmodell zumindest eine der Hypothesen (7, 8) aus dem vorangegangenen Rekursionsschritt in Abhängigkeit von den Beobachtungsdaten (2', 3') oder den Kartendaten (4) in mehrere verschiedene Hypothesen (9-11) für den aktuellen Rekursionsschritt rekursiv weiterentwickelt wird.

5. Verfahren nach Anspruch 4, wobei die Schätzung der Hypothesen im aktuellen Rekursionsschritt und/oder deren Weiterentwicklung in jeweils eine oder mehrere verschiedene Hypothesen für den nächsten Rekursionsschritt parallel auf einer Mehrzahl von Prozessoren oder Prozessorkernen durchgeführt wird.

6. Verfahren (1) nach einem der vorangehenden Ansprüche, wobei die zumindest eine Hypothese (7, 8) aus dem vorangegangenen Rekursionsschritt, die in eine oder mehrere Hypothesen (9-11) für den aktuellen Rekursionsschritt weiterentwickelt wird, auf einem der folgenden Wege oder einer Kombination aus wenigstens zwei dieser Wege ausgewählt wird:

    - Filterung mittels eines statistischen Partikelfilters;
    - Anwenden eines Branch-and-Bound-Algorithmus;
    - Auswahl einer echten Untermenge von n Hypothesen aus der Menge der Hypothesen (7, 8) des vorangegangenen Rekursionsschritts, wobei die Hypothesen der Untermenge innerhalb der Menge der Hypothesen (7, 8) die n besten Konfidenzwerte aufweisen mit $n \geqq 1$, vorzugsweise $n \geqq 2$.

7. Verfahren (1) nach einem der vorangehenden Ansprüche, wobei die sensorisch erfassten Beobachtungsdaten (2, 3) wenigstens eines der folgenden Objekte aufweisen:
    eine Fahrspurmarkierung, eine Randbebauung, ein feststehendes und/oder bewegtes Hindernis.

8. Verfahren (1) nach einem der vorangehenden Ansprüche, wobei das Erzeugen unterschiedlicher Assoziationen (6) der jeweils als Eingangsgrößen der Zustandsfunktion dienenden Beobachtungsdaten (2, 3) und Kartendaten (4) und somit der verschiedenen Hypothesen (9-11) durch verschiedene Gewichtungen und/oder Auswahlen dieser Eingangsgrößen mittels der Parametrisierung der Zustandsfunktion erfolgt.

9. Verfahren (1) nach einem der vorangehenden Ansprüche, wobei die Ortsauflösung der Kartendaten (4) mindestens 25 cm, vorzugsweise mindestens 15 cm, besonders vorzugsweise mindestens 10 cm beträgt.

10. Verfahren (1) zum Steuern eines Fahrzeugs mit den Schritten:

Ermitteln wenigstens eines Fahrbahnmodells gemäß dem Verfahren nach einem der vorangehenden Ansprüche; und

Steuern des Fahrzeugs im Rahmen eines teilautomatisierten, hochautomatisierten oder autonomen Fahrbetriebs des Fahrzeugs (14) auf Basis des wenigstens einen ermittelten Fahrbahnmodells.

11. Vorrichtung (13) zum Ermitteln eines Fahrbahnmodells für das Umfeld eines Fahrzeugs (14) mittels rekursiven Schätzens, aufweisend:

eine Sensorvorrichtung (15) zur Erfassung von Beobachtungsdaten (2, 3), die das Umfeld des Fahrzeugs (14) oder dessen Bewegung kennzeichnen;

einen Speicher (16) zum Speichern von Kartendaten (4), die das Umfeld des Fahrzeugs (14) kennzeichnen;

eine Verarbeitungseinheit (17), die zum Ausführen des Verfahrens (1) gemäß einem der Ansprüche 1 bis 9 eingerichtet ist.

12. Vorrichtung (13) nach Anspruch 11, ferner aufweisend:

eine Kommunikationseinheit, welche dazu eingerichtet ist, Hypothesen (9-11) für das zu ermittelnde Fahrbahnmodell und/oder Beobachtungsdaten (2, 3) an eine zentrale Infrastruktur zu senden und von dieser zentralen Infrastruktur Hypothesen (9-11) zu empfangen;

wobei die Verarbeitungseinheit (17) dazu eingerichtet ist, die empfangenen Hypothesen (9-11) bei der Auswahl einer der Hypothesen (7-11) als Fahrbahnmodell für das Umfeld des Fahrzeugs (14) mit einzubeziehen.

13. Fahrzeug (14), aufweisend eine Vorrichtung (13) nach einem der Ansprüche 11 oder 12.

**Claims**

1. Method (1) for determining a road model for the surroundings of a vehicle (14) by means of recursive estimation, each recursion comprising the following steps:

using sensors to acquire observation data that characterize the surroundings of the vehicle (14) or the movement thereof;

acquiring map data that cartographically characterize the surroundings of the vehicle (14);

generating a plurality of different suppositions (9-11) for the road model that is to be determined, using a parameterized state function, each of the suppositions (9-11) representing a possible road model for the current recursion step and being **characterized by** a different association (6), produced by means of an appropriate parameterization, between the observation data (2, 3), which are each used as input variables for the state function, and map data (4);

estimating a confidence value in regard to a predetermined measure of confidence for each of the suppositions (9-11) of the current recursion step by means of a recursive estimation method taking into account at least one supposition (7, 8) from the preceding recursion step as an input variable;

selecting (12), on the basis of the estimated confidence values, one of the suppositions (9-11) as the road model for the surroundings of a vehicle (14) for the current recursion step;

**characterized by**

detecting, on the basis of the confidence value distribution, whether, for multiple successive recursion steps, the suppositions with the best confidence values are regularly significantly different from the map data (4); and

if this is the case, correcting the map data (4) on the basis of the selected road model for this recursion step and/or reporting the obsolescence of the map data to a central infrastructure for providing the map data.

2. Method (1) according to Claim 1, wherein the recursive estimation is carried out by means of a Kalman filter.

3. Method (1) according to either of the preceding claims, wherein the step of selecting (12) one of the suppositions (9-11) as the road model for the surroundings of a vehicle (14) for the current recursion step involves selecting the supposition (11) with the best confidence value.

4. Method (1) according to one of the preceding claims, wherein generating the plurality of different suppositions (9-11) for the road model that is to be determined involves recursively developing at least one of the suppositions (7, 8) from the preceding recursion step into multiple different suppositions (9-11) for the current recursion step on the basis of the observation data (2', 3') or the map data (4).

5. Method according to Claim 4, wherein the estimation of the suppositions in the current recursion step and/or the development of each of them into one or more different suppositions for the next recursion step is carried out in parallel on a plurality of processors or processor cores.

6. Method (1) according to one of the preceding claims, wherein the at least one supposition (7, 8) from the preceding recursion step that is developed into one or more suppositions (9-11) for the current recursion step is selected in one of the following ways or in a combination of at least two of these ways:

- filtering by means of a statistical particle filter;
- applying a branch-and-bound algorithm;
- selecting a genuine subset of n suppositions from the set of suppositions (7, 8) from the preceding recursion step, the suppositions in the subset having the n best confidence values, where $n \geq 1$, preferably $n \geq 2$, within the set of suppositions (7, 8).

7. Method (1) according to one of the preceding claims, wherein the observation data (2, 3) acquired by sensor comprise at least one of the following objects: a lane marking, a peripheral development, a static and/or moving obstacle.

8. Method (1) according to one of the preceding claims, wherein different associations (6) between the observation data (2, 3), which are each used as input variables for the state function, and map data (4) and therefore the different suppositions (9-11) are produced by way of different weightings and/or selection of these input variables by means of the parameterization of the state function.

9. Method (1) according to one of the preceding claims, wherein the spatial resolution of the map data (4) is at least 25 cm, preferably at least 15 cm, particularly preferably at least 10 cm.

10. Method (1) for controlling a vehicle, having the steps of:

determining at least one road model using the method according to one of the preceding claims; and
controlling the vehicle in a partially automated, highly automated or autonomous driving mode of the vehicle (14) on the basis of the at least one determined road model.

11. Device (13) for determining a road model for the surroundings of a vehicle (14) by means of recursive estimation, comprising:

a sensor device (15) for acquiring observation data (2, 3) that characterize the surroundings of the vehicle (14) or the movement thereof;
a memory (16) for storing map data (4) that characterize the surroundings of the vehicle (14);
a processing unit (17) designed to perform the method (1) according to one of Claims 1 to 9.

12. Device (13) according to Claim 11, further comprising:

a communication unit designed to send suppositions (9-11) for the road model that is to be determined and/or observation data (2, 3) to a central infrastructure and to receive suppositions (9-11) from this central infrastructure;
wherein the processing unit (17) is designed to include the received suppositions (9-11) when selecting one of the suppositions (7-11) as the road model for the surroundings of the vehicle (14).

13. Vehicle (14), comprising a device (13) according to either of Claims 11 and 12.

**Revendications**

1. Procédé (1) de détermination d'un modèle de chaussée pour l'environnement d'un véhicule (14) au moyen d'une estimation récursive, chaque récurrence comprenant les étapes suivantes :

acquisition par capteurs de données d'observation qui caractérisent l'environnement du véhicule (14) ou son mouvement ;
acquisition de données cartographiques qui caractérisent l'environnement du véhicule (14) sous forme cartographique ;
génération d'une pluralité d'hypothèses (9-11) différentes pour le modèle de chaussée à déterminer selon une fonction d'état paramétrée, chacune des hypothèses (9-11) représentant un modèle de chaussée possible pour l'étape de récurrence actuelle et étant **caractérisée par** une association (6) différente, générée au moyen d'un paramétrage correspondant, des données d'observation (2, 3) et des données cartographiques (4) servant respectivement de grandeurs d'entrée de la fonction d'état ;
estimation d'une valeur de confiance concernant une mesure de confiance préalablement spécifiée pour chacune des hypothèses (9-11) de l'étape de récurrence actuelle au moyen d'un procédé d'estimation récursif en incluant au moins une hypothèse (7, 8) de l'étape de récurrence précédente en tant que grandeur d'entrée ;
sélection (12), sur la base des valeurs de confiance estimées, de l'une des hypothèses (9-11) en tant que modèle de chaussée pour l'environnement d'un véhicule (14) pour l'étape de récurrence actuelle ;

**caractérisé par**

identification, sur la base de la distribution des valeurs de confiance, si, pour plusieurs étapes de récurrence successives, les hypothèses ayant les meilleures valeurs de confiance s'écartent régulièrement de manière significative des données cartographiques (4) ; et si tel est le cas, correction des données cartographiques (4) sur la base du modèle de chaussée sélectionné pour cette étape de récurrence et/ou signalement de la non-actualité des données cartographiques à une infrastructure centrale en vue de la fourniture des données cartographiques.

2. Procédé (1) selon la revendication 1, l'estimation récursive étant effectuée au moyen d'un filtre de Kalman.

3. Procédé (1) selon l'une des revendications précédentes, l'hypothèse (11) qui possède la meilleure valeur de confiance étant sélectionnée lors de l'étape de sélection (12) de l'une des hypothèses (9-11) en tant que modèle de chaussée pour l'environnement d'un véhicule (14) pour l'étape de récurrence actuelle.

4. Procédé (1) selon l'une des revendications précédentes, au moins l'une des hypothèses (7, 8) de l'étape de récurrence précédente étant, lors de la génération de la pluralité d'hypothèses (9-11) différentes pour le modèle de chaussée à déterminer, développée de manière récursive en plusieurs hypothèses (9-11) différentes pour l'étape de récurrence actuelle en fonction des données d'observation (2', 3') ou des données cartographiques (4).

5. Procédé selon la revendication 4, l'estimation des hypothèses dans l'étape de récurrence actuelle et/ou leur développement en respectivement une ou plusieurs hypothèses différentes pour l'étape de récurrence suivante étant effectué en parallèle sur une pluralité de processeurs ou noyaux de processeur.

6. Procédé (1) selon l'une quelconque des revendications précédentes, l'au moins une hypothèse (7, 8) de l'étape de récurrence précédente, qui est développée en une ou plusieurs hypothèses (9-11) pour l'étape de récurrence actuelle, étant sélectionnée de l'une des manières suivantes ou une combinaison d'au moins deux de ces manières :

- filtrage au moyen d'un filtre statistique à particules ;

- application d'un algorithme de type séparation et évaluation ;
- sélection d'un sous-ensemble réel de n hypothèses parmi l'ensemble des hypothèses (7, 8) de l'étape de récurrence précédente, les hypothèses du sous-ensemble présentant, au sein de l'ensemble des hypothèses (7, 8), les n meilleures valeurs de confiance, avec n ≥ 1, de préférence n ≥ 2.

7. Procédé (1) selon l'une des revendications précédentes, les données d'observation (2, 3) acquises par capteurs présentant au moins l'un des objets suivants : un marquage de voie de circulation, une construction en bordure, un obstacle fixe et/ou mobile.

8. Procédé (1) selon l'une des revendications précédentes, la génération de différentes associations (6) des données d'observation (2, 3) et des données cartographiques (4) servant respectivement de grandeurs d'entrée de la fonction d'état, et ainsi des différentes hypothèses (9-11), s'effectuant par différentes pondérations et/ou sélections de ces grandeurs d'entrée au moyen de la paramétrisation de la fonction d'état.

9. Procédé (1) selon l'une des revendications précédentes, la résolution spatiale des données cartographiques (4) étant d'au moins 25 cm, de préférence d'au moins 15 cm, de manière particulièrement préférée d'au moins 10 cm.

10. Procédé (1) de commande d'un véhicule, comprenant les étapes suivantes :

détermination d'au moins un modèle de chaussée conformément au procédé selon l'une des revendications précédentes ; et commande du véhicule dans le cadre d'une opération de conduite partiellement automatisée, hautement automatisée ou autonome du véhicule (14) sur la base de l'au moins un modèle de chaussée déterminé.

11. Dispositif (13) de détermination d'un modèle de chaussée pour l'environnement d'un véhicule (14) au moyen d'une estimation récursive, comprenant :

un dispositif capteur (15) destiné à acquérir des données d'observation (2, 3) qui caractérisent l'environnement du véhicule (14) ou son mouvement ; une mémoire (16) destinée à stocker des données cartographiques (4) qui caractérisent l'environnement du véhicule (14) ; une unité de traitement (17) qui est conçue pour mettre en œuvre le procédé (1) selon l'une des revendications 1 à 9.

12. Dispositif (13) selon la revendication 11, comprenant en outre :

   une unité de communication, laquelle est conçue pour envoyer des hypothèses (9-11) pour le modèle de chaussée à déterminer et/ou des données d'observation (2, 3) à une infrastructure centrale et pour recevoir des hypothèses (9-11) de la part de cette infrastructure centrale ; l'unité de traitement (17) étant conçue pour inclure les hypothèses (9-11) reçues lors de la sélection de l'une des hypothèses (7-11) en tant que modèle de chaussée pour l'environnement du véhicule (14).

13. Véhicule (14), comprenant un dispositif (13) selon l'une des revendications 11 ou 12.

**Fig. 1**

Fig. 2

**IN DER BESCHREIBUNG AUFGEFÜHRTE DOKUMENTE**

**In der Beschreibung aufgeführte Patentdokumente**

- DE 102005038314 A1